# EUROPEAN PATENT APPLICATION

(11) **EP 1 795 902 A1**
(43) Date of publication of application: **13.06.2007**
(21) Application number: 05785673.4
(22) Date of filing: 26.09.2005
(51) Int. Cl.: G01P 15/00, B60C 23/00

(54) **METHOD AND DEVICE FOR DETECTING ACCELERATION, ACCELERATION SENSOR MODULE, AND TIRE**

(30) Priority: 27.09.2004 JP 2004278752
(71) Applicant: THE YOKOHAMA RUBBER CO., LTD., Tokyo 105-8685 (JP)
(72) Inventor: Kitazaki, Tsuyoshi, The Yokohama Rubber Co., Ltd., Hiratsuka-shi, Kanagawa 2540047 (JP); Hashimura, Yoshiaki, The Yokohama Rubber Co., Ltd, Hiratsuka-shi, Kanagawa 2540047 (JP); Hsttori, Yutaka, The Yokohama Rubber Co., Ltd., Hiratsuka-shi, Kanagawa 2540047 (JP)
(74) Representative: HOFFMANN EITLE
(86) International application number: PCT/JP2005/017581
(87) International publication number: WO 2006/035688

(57) **Abstract**

Provision is made for an acceleration detection method and a device therefor, an acceleration sensor module, and a tire with which high-accuracy detection of acceleration can be implemented over the whole detection range. An acceleration detection device 100 is configured of an insulating substrate 101, two acceleration sensors 110A and 110B arranged on a substrate 101, a control IC 200, and a power supply section 300; the two acceleration sensors 110A and 110B are made to have respective detectable ranges whose upper limits are maximal acceleration values that can be detected with a tolerance of ±1% and whose lower limits are minimal acceleration values, and the detectable ranges of the acceleration sensors 110A and 110B are set to be so different from each other as to have respective ranges at least part of which do not overlap each other; and by use of the acceleration sensors 110A and 110B, acceleration values, from lower to higher ones, to be detected are detected at the accuracy in accordance with the tolerance.

## Description

### Technical Field

The present invention relates to an acceleration detection method and a device therefor, an acceleration sensor module, and a tire for detecting acceleration produced in a tire or the like of a vehicle.

### Background Art

To date, the tire monitoring, based on an acceleration detection value, disclosed in National Publication of International Patent Application No. 2002-511812 and the tire monitoring, by means of the road-surface-detennination device and system disclosed in Japanese PatentPublicationNo. 2002-340863, inwhich, bymountinganacceleration sensor inside a tire or by embedding an acceleration sensor in a tread portion, the road-surface condition and the ground contact length are anticipated based on detected acceleration, have been proposed. In the disclosed techniques, acceleration is detected over the whole speed range, by use of a single-specification acceleration sensor.
Patent Document 1: National Publication of International Patent Application No. 2002-511812
Patent Document 2: Japanese Patent Publication No. 2002-340863

### Disclosure of the Invention

However, low-speed running and high-speed running are largely different from each other in the acceleration imposed on the tires. The acceleration, in the z-axis direction (the radial direction of a tire), imposed on the tire of a running vehicle is based on the resultant force of centrifugal force due to the rotation of a tire and the gravity; for example, the centrifugal force, in the z-axis direction, imposed on the tire of a vehicle running at a speed of 100 km/hour is 25 times as large as the centrifugal force imposed on the tire of the vehicle running at a speed of 20 km/hour.

Therefore, when, in order to detect at high accuracy the z-axis-direction acceleration at the time when a vehicle is running at high speed, an acceleration sensor is utilized whose maximal detectable acceleration value (the maximal acceleration value that can be detected with an error of ±1%) is large, the minimal detectable value (the minimal acceleration value that can be detected with an error of ±1%) becomes large, whereby the accuracy of detecting the z-axis-direction acceleration at the time when a vehicle is running at low speed is inevitably deteriorated. In addition, it has been a problem that, when, in order to detect at high accuracy the z-axis-direction acceleration at the time when a vehicle is running at low speed, an acceleration sensor is utilized whose minimal detectable value is small, the maximal detectable value also becomes small, whereby the accuracy of detecting the z-axis-direction acceleration at the time when the vehicle is running at high speed is reduced.

The object of the present invention is, in consideration of the foregoing problems, to provide an acceleration detection method and a device therefor, an acceleration sensor module, and a tire with which high-accuracy detection of acceleration can be implemented over the whole detection range.

In order to achieve the foregoing object, the present invention proposes an acceleration detection method of detecting, through an acceleration sensor provided in a tire, acceleration, in a predetermined direction, that is produced on the tire of a running vehicle; in the method, two or more acceleration sensors are included that have respective detectable ranges each including a maximal acceleration value and a minimal acceleration value that can be detected with a predetermined tolerance, each detectable range having an upper limit that is the maximal acceleration value and a lower limit that is the minimal acceleration value; the respective detectable ranges of the acceleration sensors are set to be so different from one another as to have respective ranges at least part of which do not overlap one another; and by use of the two or more acceleration sensors, acceleration values, from lower to higher values, to be detected are detected, at the accuracy in accordance with the predetermined tolerance.

According to the acceleration detection method of the present invention, because the respective detectable ranges of the two or more acceleration sensors are set to be so different from one another as to have respective ranges at least part of which do not overlap one another, any one of the acceleration sensors can detect acceleration that cannot be detected by the other acceleration sensors with the predetermined tolerance, whereby acceleration values, from lower to higher values, to be detected can be detected, at the accuracy in accordance with the predetermined tolerance.

Moreover, in order to achieve the foregoing object, the present invention proposes an acceleration detection device for detecting, through an acceleration sensor provided in a tire, acceleration, in a predetermined direction, that is produced on the tire of a running vehicle; the acceleration detection device includes two or more acceleration sensors that have respective detectable ranges each including a maximal acceleration value and a minimal acceleration value that can be detected with a predetermined tolerance, each detectable range having an upper limit that is the maximal acceleration value and a lower limit that is the minimal acceleration value and means for allocating different acceleration sensors to two or more divided running speed ranges of the vehicle and detecting acceleration that, in each divided running speed range, is produced on the tire; the respective detectable ranges of the acceleration sensors are set to be so different from one another as to have respective ranges at least part of which do not overlap one another.

According to the acceleration detection device of the present invention, because the respective detectable ranges of the two or more acceleration sensors are set to be so different from one another as to have respective ranges at least part of which do not overlap one another, any one of the acceleration sensors can detect acceleration that cannot be detected by the other acceleration sensors with the predetermined tolerance, whereby acceleration values, from lower to higher values, to be detected can be detected, at the accuracy in accordance with the predetermined tolerance.

Still moreover, in order to achieve the foregoing object, the present invention proposes an acceleration sensor module in which two or more acceleration sensors are included that have respective detectable ranges each including a maximal acceleration value and a minimal acceleration value that can be detected with a predetermined tolerance, each detectable range having an upper limit that is the maximal acceleration value and a lower limit that is the minimal acceleration value; and the respective detectable ranges of the acceleration sensors are set to be so different from one another as to have respective ranges at least part of which do not overlap one another.

According to the acceleration sensor module of the present invention, because the respective detectable ranges of the two or more acceleration sensors are set to be so different from one another as to have respective ranges at least part of which do not overlap one another, any one of the acceleration sensors can detect acceleration that cannot be detected by the other acceleration sensors with the predetermined tolerance, whereby acceleration values, from lower to higher values, to be detected can be detected, at the accuracy in accordance with the predetermined tolerance.

Furthermore, in order to achieve the foregoing object, the present invention proposes a tire provided with an acceleration sensor for detecting acceleration, in a predetermined direction, that is produced on tires of a running vehicle; in the tire, two or more acceleration sensors are included that have respective detectable ranges each including a maximal acceleration value and a minimal acceleration value that can be detected with a predetermined tolerance, each detectable range having an upper limit that is the maximal acceleration value and a lower limit that is the minimal acceleration value; the respective detectable ranges of the acceleration sensors are set to be so different from one another as to have respective ranges at least part of which do not overlap one another.

According to the tire of the present invention, because the tire includes the two or more acceleration sensors and the respective detectable ranges of the two or more acceleration sensors are set to be so different from one another as to have respective ranges at least part of which do not overlap one another, any one of the acceleration sensors can detect acceleration that cannot be detected by the other acceleration sensors with the predetermined tolerance, whereby, by use of the two or more acceleration sensors, acceleration values, from lower to higher values, to be detected can be detected, at the accuracy in accordance with the predetermined tolerance.

According to the present invention, detection of acceleration over the whole detection range, which has not been able to be accurately performed by a single acceleration sensor only, can be implemented at high accuracy.

### Brief Description of the Drawings

Figure 1 is a chart for explaining the outline of the present invention;
Figure 2 is a chart for explaining the outline of the present invention;
Figure 3 is a chart for explaining the outline of the present invention;
Figure 4 is a chart for explaining the outline of the present invention;
Figure 5 is a view illustrating a tire according to Example 1 of the present invention;
Figure 6 is a broken perspective view illustrating a tire according to Example 1 of the present invention;
Figure 7 is an external perspective view illustrating an acceleration detection device according to Example 1 of the present invention;
Figure 8 is a block diagram illustrating the electric-system circuit of an acceleration detection device according to Example 1 of the present invention;
Figure 9 is an external perspective view illustrating an acceleration sensor according to Example 1 of the present invention;
Figure 10 is a cross-sectional view taken along Line A-A in Figure 9;
Figure 11 is a configuration diagram illustrating the electric-system circuit of an acceleration sensor according to Example 1 of the present invention;
Figure 12 is a diagram illustrating a bridge circuit, utilizing an acceleration sensor according to Example 1 of the present invention, for detecting acceleration in the x-axis direction;
Figure 13 is a diagram illustrating a bridge circuit, utilizing an acceleration sensor according to Example 1 of the present invention, for detecting acceleration in the y-axis direction;
Figure 14 is a diagram illustrating a bridge circuit, utilizing an acceleration sensor according to Example 1 of the present invention, for detecting acceleration in the z-axis direction;
Figure 15 is a view illustrating the operation of an acceleration sensor according to Example 1 of the present invention;
Figure 16 is a view illustrating the operation of an acceleration sensor according to Example 1 of the present invention;
Figure 17 is a chart for explaining a detection-range allocation of an acceleration sensor according to Example 1 of the present invention;
Figure 18 is a chart for explaining another detection-range allocation of the acceleration sensor;
Figure 19 is an external perspective view illustrating an acceleration detection device according to Example 2 of the present invention;
Figure 20 is a block diagram illustrating the electric-system circuit of an acceleration detection device according to Example 2 of the present invention; and
Figure 21 is an external perspective view illustrating an acceleration sensor according to Example 2 of the present invention.

### Description of Symbols

10 ... tire, 11 ... cap tread, 12 ... undertread, 13A, 13B ... belt, 14 ... carcass, 15 ... tire main body, 16 ... rim, 100 ... acceleration detection device, 101 ... substrate, 102 ... antenna, 103, 104 ... wiring conductive strip, 110, 110A, 110B ... acceleration sensor, 120 ... silicon substrate, 130 ... diaphragm, 131 to 134 ... diaphragm piece, 140 ... thick-filmportion, 150 ... plumb bob, 200 ... control IC, 210 ... computation section, 220 ... communication section, 300 ... power supply section, 400 ... acceleration sensor module, 31A to 31C ... voltage detection unit, 32A to 32C ... DC power supply unit, Rx1 to Rx4, Ry1 to Ry4, and Rz1 to Rz4 ... piezoresistor (diffusion resistor).

### Best Mode for Carrying Out the Invention

The basic concept of the present invention is to enable high-accuracy detection, with a predetermined tolerance, of acceleration over the whole detection range, by use of two or more acceleration sensors that have detectable ranges different from each other and can detect acceleration with the predetermined tolerance.

For example, in comparison between a first acceleration sensor that can detect acceleration of 0 G to 3 G with an error of ±1% and a second acceleration sensor that can detect acceleration of 10 G to 30 G with an error of ±1%, when the first acceleration sensor detects acceleration larger than 3 G, the error in the detection result becomes larger than ±1%, whereby the detection accuracy is reduced. In addition, when the second acceleration sensor detects acceleration smaller than 10 G or larger than 30 G, the error in the detection result becomes larger than ±1%, whereby the detection accuracy is reduced.

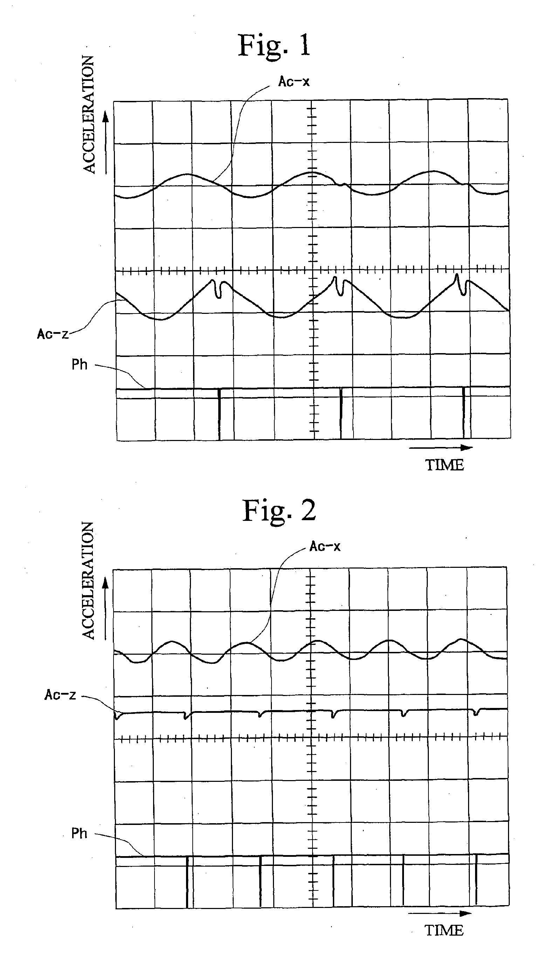

Figures 1 to 4 are charts representing the results of actual measurement of acceleration produced in the x-axis direction (the rotating direction of a tire) and the z-axis direction (the radial direction of the tire, with respect to the rotation axis) in the case where the first and second acceleration sensors are mounted inside the tire and the running speed of the vehicle is 5 km/h or 20 km/h.

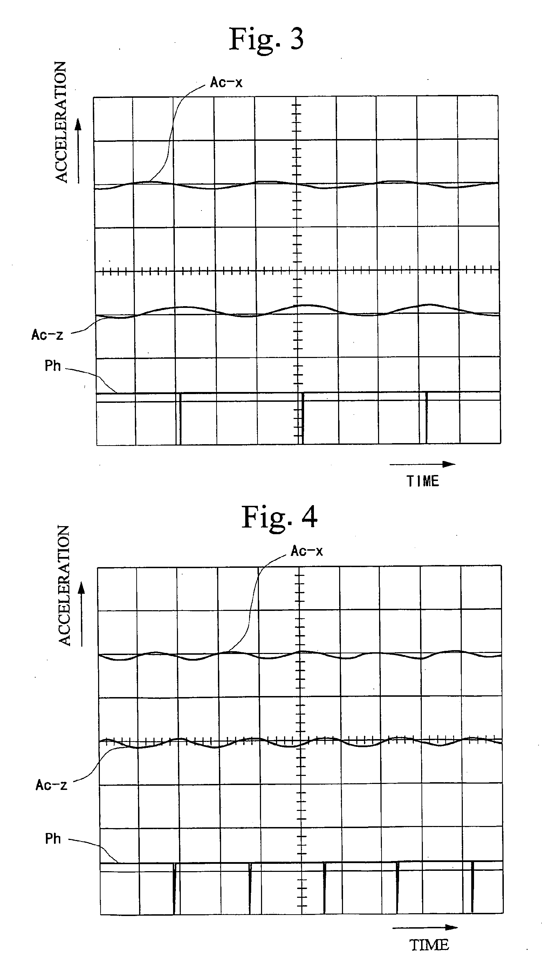

In other words, Figure 1 is a chart representing the result of detection, by the first acceleration sensor, of acceleration in the case where a vehicle runs at a speed of 5 km/h; Figure 2 is a chart representing the result of detection, by the first acceleration sensor, of acceleration in the case where a vehicle runs at a speed of 20 km/h; Figure 3 is a chart representing the result of detection, by the second acceleration sensor, of acceleration in the case where a vehicle runs at a speed of 5 km/h; and Figure 4 is a chart representing the result of detection, by the second acceleration sensor, of acceleration in the case where a vehicle runs at a speed of 20 km/h. In Figures 1 to 4, the ordinate denotes the magnitude of acceleration and the abscissa denotes time. Additionally, Ac-x represents the value of acceleration produced in the x-axis direction, Ac-z represents the value of acceleration produced in the z-axis direction, and Ph represents the rotation cycle of a tire.

Normally, as the acceleration in the z-axis direction, acceleration as the resultant force of the centrifugal force and the gravity is detected; however, in the result of detection of acceleration, the centrifugal force is enlarged with increase in the running speed of a vehicle, whereby, in particular, the result of detection of acceleration in the z-axis direction changes largely in response to the running speed of a vehicle.

As represented in Figures 1 and 2, with the first acceleration sensor, almost the same detection result is obtained for the x-axis-directionacceleration, even though the running speed of a vehicle changes. However, even though, with the first acceleration sensor, the z-axis-direction acceleration in the case where the vehicle is running at a speed of 5 km/h can explicitly be detected as values within a tolerance, the result of detection of the z-axis-direction acceleration in the case where the vehicle is running at a speed of 20 km/h is saturated and undetectable.

Additionally, as represented in Figures 3 and 4, with the second acceleration sensor, almost the same detection result is obtained for the x-axis-direction acceleration, even though the running speed of the vehicle changes. However, even though, with the second acceleration sensor, the z-axis-direction acceleration in the case where the vehicle is running at a speed of 20 km/h can explicitly be detected as values within the tolerance, the error in the result of detection of the z-axis-direction acceleration in the case where the vehicle is running at a speed of 5 km/h is enlarged.

As explained above, by utilizing, in accordance with the range of acceleration to be detected, two or more acceleration sensors that can detect acceleration, with a predetermined tolerance, and have acceleration detection ranges different from one another, acceleration over the whole detection range can be detected with the tolerance.

### Example 1

An embodiment that specifically describes the outline of the present invention will be explained hereinafter.

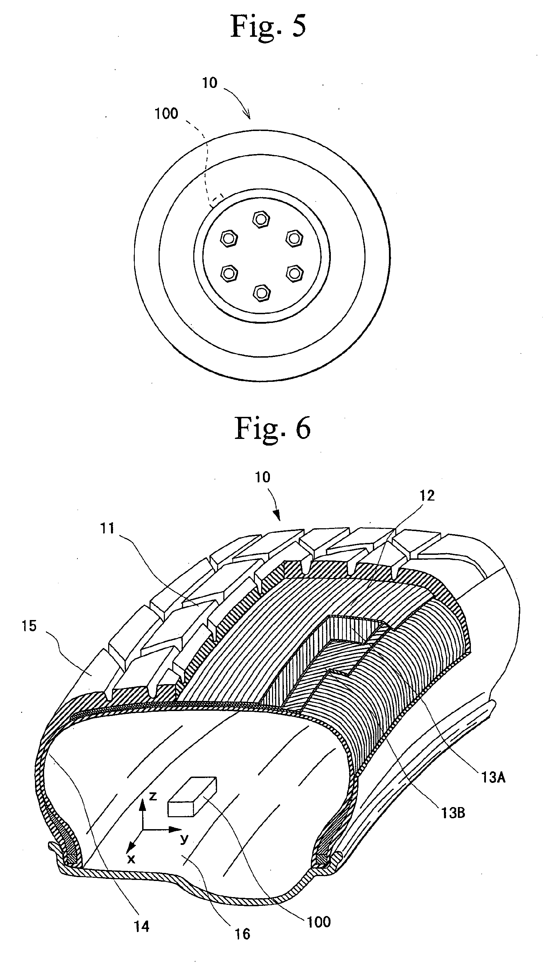

Figures 5 and 6 are views illustrating a tire according to Example 1 of the present invention. In Figures 5 and 6, reference numeral 10 denotes a tire, e.g., a well-known tubeless radial tire; in Example 1, the tire 10 includes a wheel and a rim. The tire 10 is formed of a tire main body 15, a rim 16, and a wheel (unillustrated); the tire main body 15 is configured of a cap tread 11, an undertread 12, belts 13A and 13B, a carcass 14, and the like that are well-known. In addition, in Example 1, as illustrated in Figure 6, the tire 10 includes an acceleration detection device 100 that is fixed to the rim 16. Additionally, in Example 1, the explanation below will be made on the assumption that the rotation direction, the rotation-axis direction, and the radial direction with respect to the rotation axis, of the tire 10, is the x-axis direction, the y-axis direction, and the z-axis direction, respectively.

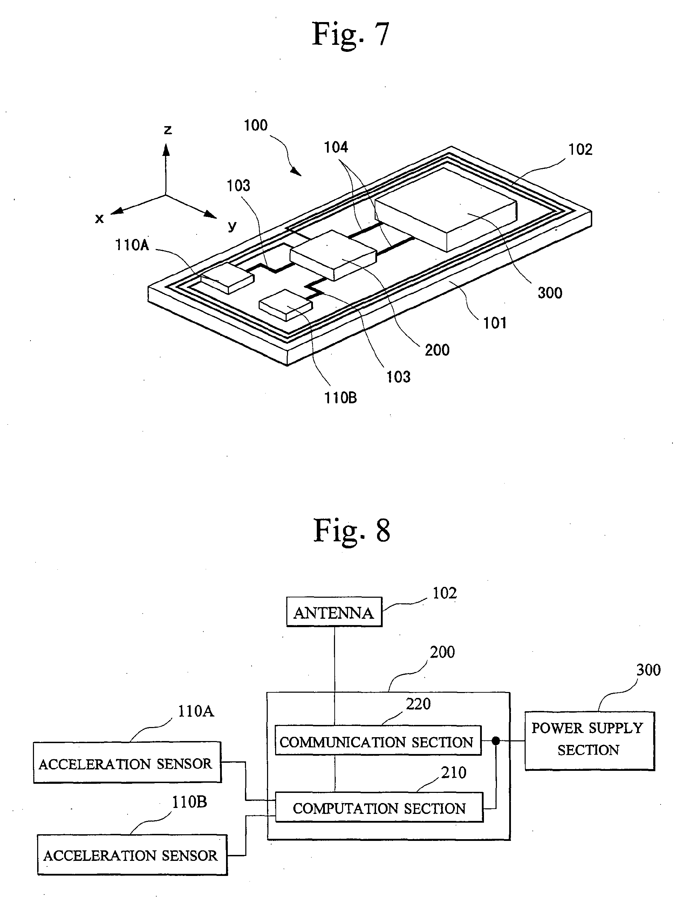

As illustrated in Figures 7 and 8, the acceleration detection device 100 includes an insulating substrate 101, two acceleration sensors 110A and 110B arranged on the substrate 101, a control IC 200, and a power supply section 300.

On the top side of the substrate 101 having a shape of a rectangular plate, component-mounting lands (unillustrated) made of an electric conductor, wiring conductive strips 103 and 104, and conductive strips for a loop-shaped antenna 102 are formed.

The control IC 200, configured mainly of a well-known CPU and a ROM in which a program for driving the CPU is stored, incorporates a computation section 210 and a communication section 220 that are configured of both software and hardware. The computation section 210, connected through the wiring conductive strips 103 with the acceleration sensors 110A and 110B, reads electric signals outputted from the acceleration sensors 110A and 110B and detects acceleration. Additionally, the computation section 210 transmits toward the outside the information on the detected acceleration, by way of the communication section 220 and the antenna 102 and through an electric wave having a predetermined frequency.

The power supply section 300, configured of, e.g., any one of an electric power generator, a secondary battery, and an electric condenser or a combination thereof, supplies the computation section 210 and the communication section 220 with the respective driving electric power, by way of the wiring conductive strips 104.

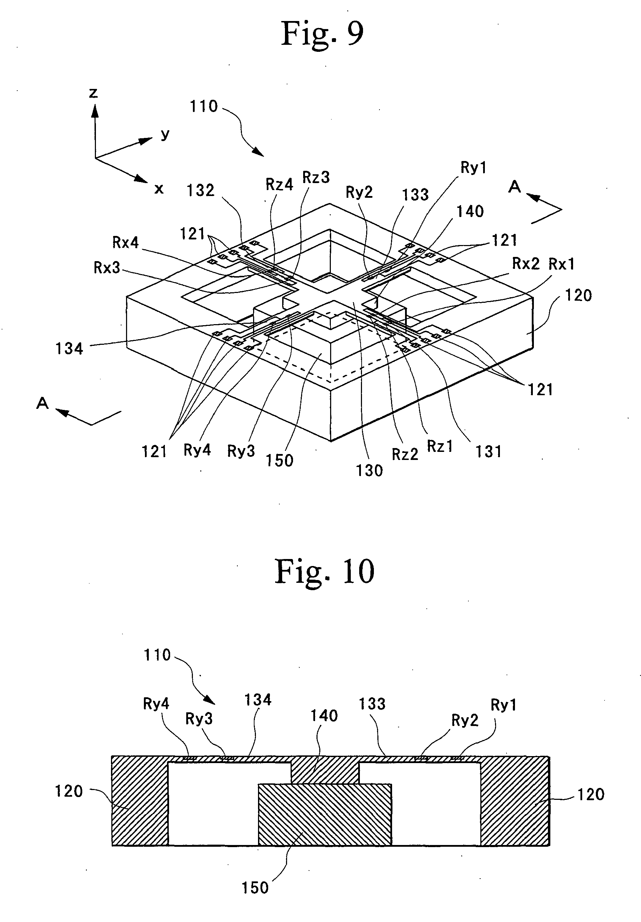

As illustrated in Figures 9 to 11, the acceleration sensor 110 (110A and 110B) incorporates a thin-film diaphragm formed on a silicon substrate 120.

The silicon substrate 120 is of a rectangular shape having an opening in the center thereof; at the opening, a cross-shaped thin-film diaphragm 130 is formed; on the corresponding top sides of diaphragm pieces 131 to 134, piezoresistors (diffusion resistors) Rx1 to Rx4, Ry1 to Ry4, and Rz1 to Rz4 are formed.

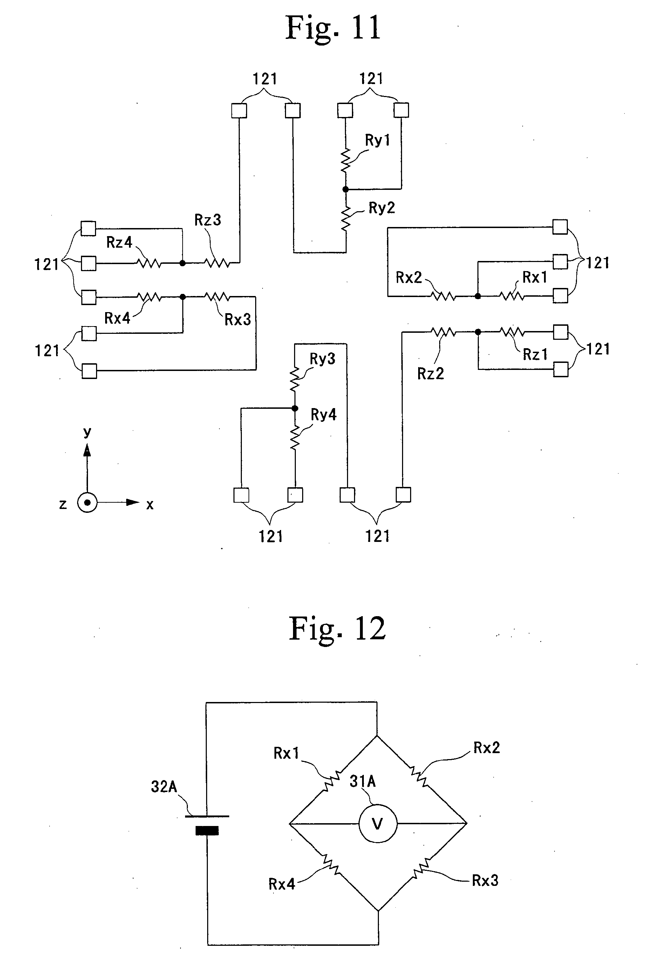

Specifically, on the one diaphragm piece 131 out of the diaphragm pieces 131 and 132 arranged in a line, the piezoresistors Rx1, Rx2, Rz1, and Rz2 are formed; on the other diaphragm piece 132, the piezoresistors Rx3, Rx4, Rz3, and Rz4 are formed. Additionally, on the one diaphragm piece 133 out of the diaphragm pieces 133 and 134 arranged in the line perpendicular to diaphragm pieces 131 and 132, the piezoresistors Ry1 and Ry2 are formed; on the other diaphragm piece 134, the piezoresistors Ry3 and Ry4 are formed. Moreover, the piezoresistors Rx1 to Rx4, Ry1 to Ry4, and Rz1 to Rz4 are connected as illustrated in Figure 11 so as to configure a resistor-bridge circuit for detecting the respective acceleration components in the x-axis, y-axis, and z-axis directions that are perpendicular to one another, and connected with corresponding connection electrodes 121 provided on the surface of the peripheral portion of the silicon substrate 120.

Still moreover, at the intersection of the diaphragm pieces 131 and 132 and the diaphragm pieces 133 and 134, a thick-film portion 140 is formed on one side of the middle portion of the diaphragm 130; to the surface of the thick-film portion 140, a plumb bob 150, e.g., formed of glass, having a rectangular-parallelepiped shape is attached.

In the case where the acceleration sensor 110 configured as described above is utilized, three resistor-bridge circuits are configured, as illustrated in Figures 12 to 14. In addition, the resistor-bridge circuits are formed in the control IC 200.

In other words, as illustrated in Figure 12, in the bridge circuit for detecting x-axis-direction acceleration, the positive electrode of a DC power supply unit 32A is connected with the connection point of the one end of the piezoresistor Rx1 and the one end of the piezoresistor Rx2, and the negative electrode of the DC power supply unit 32A is connected with the connection point of the one end of the piezoresistor Rx3 and the one end of the piezoresistor Rx4. Additionally, the one end of a voltage detection unit 31A is connected with the connection point of the other end of the piezoresistor Rx1 and the other end of the piezoresistor Rx4, and the other end of the voltage detection unit 31A is connected with the connection point of the other end of the piezoresistor Rx2 and the other end of the piezoresistor Rx3.

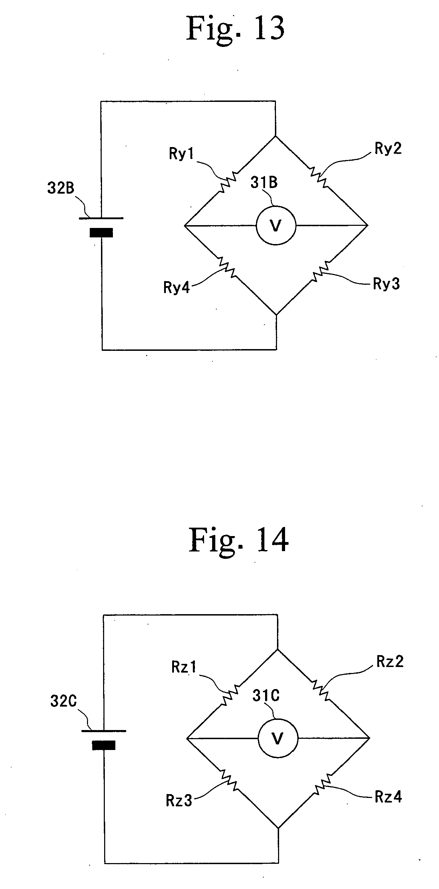

Additionally, as illustrated in Figure 13, in the bridge circuit for detecting y-axis-direction acceleration, the positive electrode of a DC power supply unit 32B is connected with the connection point of the one end of the piezoresistor Ry1 and the one end of the piezoresistor Ry2, and the negative electrode of the DC power supply unit 32B is connected with the connection point of the one end of the piezoresistor Ry3 and the one end of the piezoresistor Ry4. Additionally, the one end of a voltage detection unit 31B is connected with the connection point of the other end of the piezoresistor Ry1 and the other end of the piezoresistor Ry4, and the other end of the voltage detection unit 31B is connected with the connection point of the other end of the piezoresistor Ry2 and the other end of the piezoresistor Ry3.

Additionally, as illustrated in Figure 14, in the bridge circuit for detecting z-axis-direction acceleration, the positive electrode of a DC power supply unit 32C is connected with the connection point of the one end of the piezoresistor Rz1 and the one end of the piezoresistor Rz2, and the negative electrode of the DC power supply unit 32C is connected with the connection point of the one end of the piezoresistor Rz3 and the one end of the piezoresistor Rz4. Additionally, the one end of a voltage detection unit 31C is connected with the connection point of the other end of the piezoresistor Rz1 and the other end of the piezoresistor Rz3, and the other end of the voltage detection unit 31C is connected with the connection point of the other end of the piezoresistor Rz2 and the other end of the piezoresistor Rz4.

With the acceleration sensor 110 (110A and 110B) configured as described above, when force produced due to acceleration imposed on the acceleration sensor 110 is applied to the plumb bob 150, the diaphragm pieces 131 to 134 are distorted, whereby the resistance values of the piezoresistors Rx1 to Rx4 , RyltoRy4, and Rz 1 to Rz4 change. Accordingly, by forming the resistor-bridge circuits with the piezoresistors Rx1 to Rx4, Ry1 to Ry4, and Rz1 to Rz4 provided on the corresponding diaphragm pieces 131 to 134, acceleration components in the x-axis, y-axis, and z-axis directions that are perpendicular to one another can be detected.

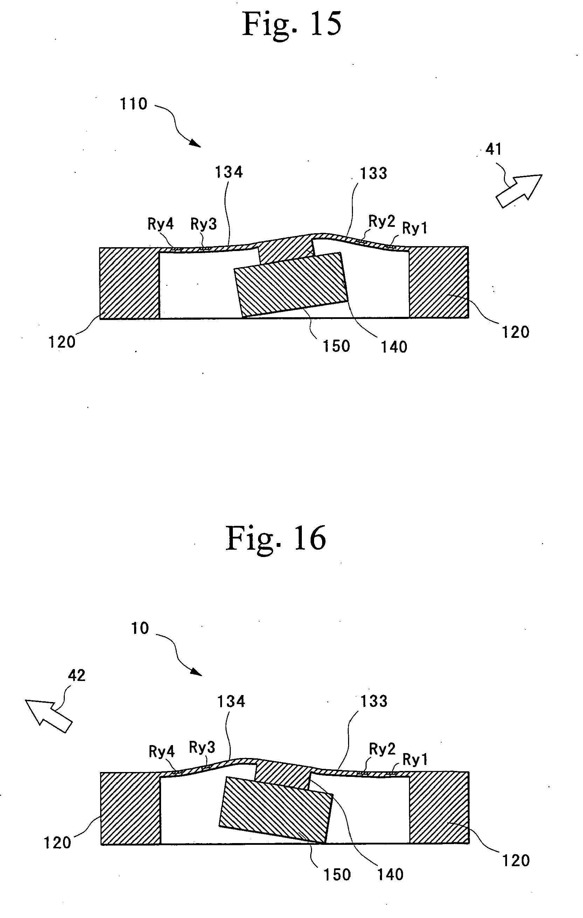

For example, as illustrated in Figure 15 and 16, in the case where acceleration occurs that causes force 41 or 42 including its component in the direction perpendicular to the plane of the diaphragm 130 and force the same as or larger than a predetermined value is applied to the other side of the diaphragm 130, the diaphragm 130 is distorted and extends in the direction in which the force 41 or 42 is applied.

Thus, while the tire 10 is rotating and the vehicle is running, acceleration components, in the x-axis, y-axis, and z-axis directions that are perpendicular to one another, that are produced due to the rotation of the tire 10 can be detected by the acceleration sensor 110 (110A and 110B).

In addition, the acceleration sensors 110A and 110B are differently configured in such a way as to, for the respective x-axis, y-axis, and z-axis directions, have at least non-overlapped portions in their acceleration detection ranges in which acceleration can be detected with a predetermined tolerance, i.e., the ranges (referred to as a detectable range, hereinafter) in which the upper limit is the maximal value among acceleration values that can be detected with the predetermined tolerance and the lower limit is the minimal acceleration value. For instance, by setting the lengths, widths, thicknesses, or the materials of the diaphragm pieces 131 to 134 of the respective acceleration sensor 110A and 110B, or the mass, the size, or the like of the plumb bob 150 to be different from one another, the detectable ranges can be set to be different from one another.

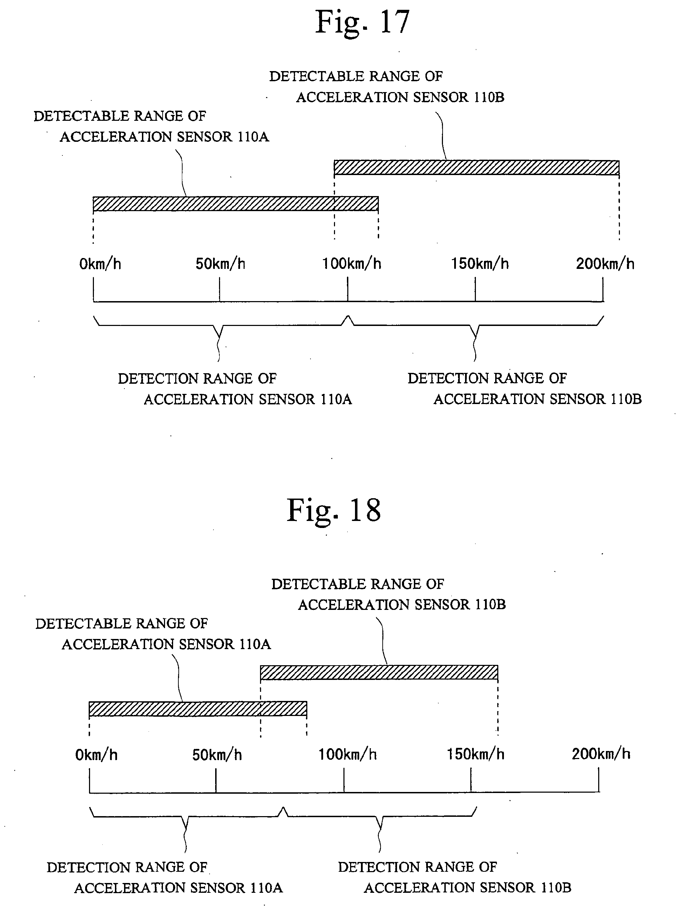

As illustrated in Figure 17, in Example 1, by setting the detectable range of the acceleration sensor 110A to cover acceleration produced in the case where the running speed of a vehicle is in a range from 0 km/h to 100 km/h and by setting the detectable range of the acceleration sensor 110B to cover acceleration produced in the case where the running speed of the vehicle is in a range from 100 km/h to 200 km/h, the acceleration sensor 110A detects acceleration produced in the case where the running speed of the vehicle is in a range from 0 km/h to 100 km/h and the acceleration sensor 110B detects acceleration produced in the case where the running speed of the vehicle is in a range from 100 km/h to 200 km/h, all the acceleration within the whole detection range of 0 km/h to 200 km/h can be detected with a detection error of ±1%.

In addition, it goes without saying that, as illustrated in Figure 18, the detectable range of the acceleration sensors 110A and 110B may arbitrarily be changed in accordance with the maximal running speed of a vehicle. In an example represented in Figure 18, the detectable range of the acceleration sensor 110A is set as to cover acceleration produced in the case where the running speed of a vehicle is in a range from 0 km/h to 75 km/h, and the detectable range of the acceleration sensor 110B is set as to cover acceleration produced in the case where the running speed of a vehicle is in a range from 75 km/h to 150 km/h. As a result, all the acceleration within the whole detection range of 0 km/h to 150 km/h can be detected with a detection error of ±1%.

Moreover, in Example 1, the acceleration sensor 110 (110A and 110B) is constituted by use of a diaphragm; however, it goes without saying that the acceleration sensor may be constituted by use of a member other than a diaphragm.

Still moreover, in Example 1, the acceleration detection device 100 is constituted that includes the two acceleration sensors 110A and 110B; however, an acceleration detection device may be constituted that includes three or more acceleration sensors respective detectable ranges of which are set to be different from one another.

Furthermore, in Example 1, the acceleration sensor is constituted so as to detect respective acceleration components in the x-axis, y-axis, andz-axisdirections; however, an acceleration sensor may be constituted that can detect any one or any two of the acceleration components.

In addition, in Example 1, the rotation direction, the rotation-axis direction, and the radial direction, of the tire 10, are set as the x-axis direction, the y-axis direction, and the z-axis direction, respectively; however, the present invention is not limited to that setting.

### Example 2

Next, Example 2 of the present invention will be explained.

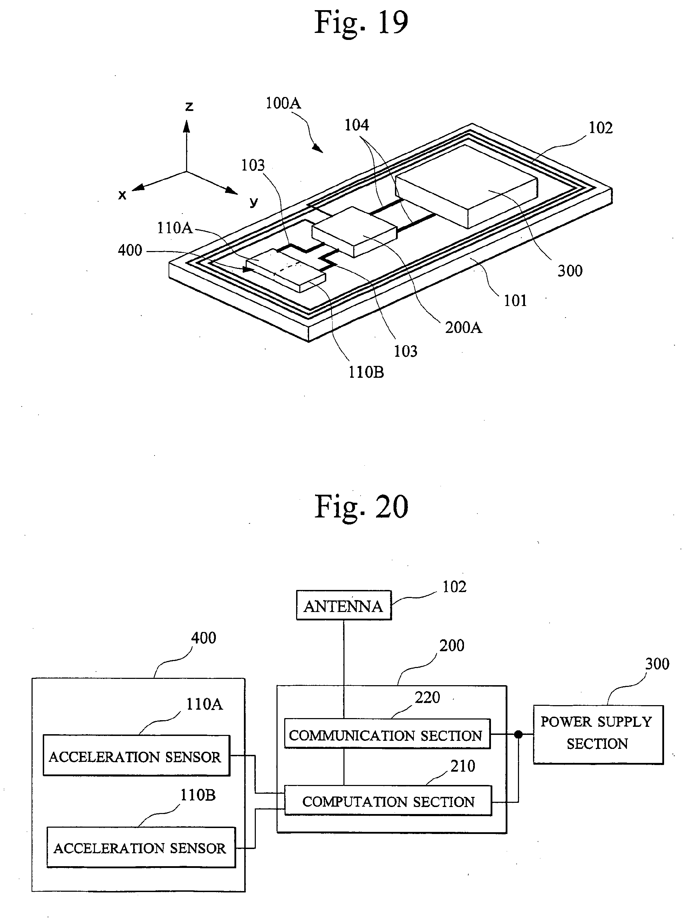

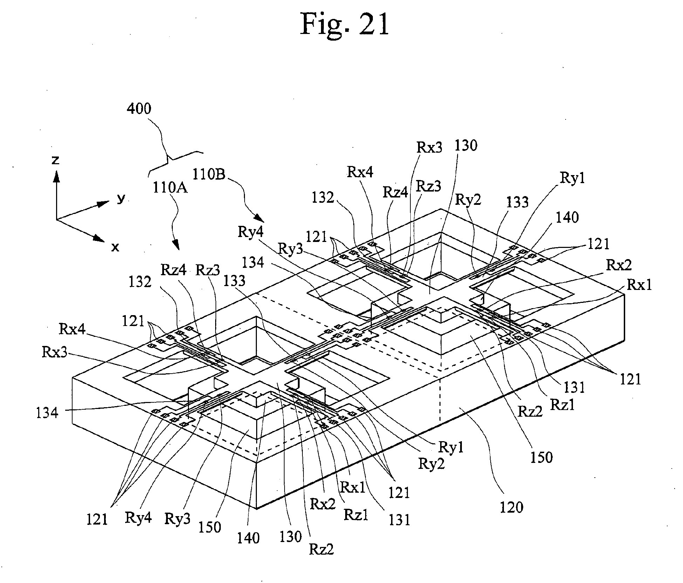

Figure 19 is an external perspective view illustrating an acceleration detection device according to Example 2; Figure 20 is a block diagram illustrating the electric-system circuit of an acceleration detection device according to Example 2; and Figure 21 is an external perspective view illustrating an acceleration sensor module according to Example 2. In Figures 19, 20, and 21, the same constituent elements as those in Example 1 are denoted by the same reference characters, and explanations therefor will be omitted. The difference between Example 1 and Example 2 lies in that, in Example 2, an acceleration detection device 100A is constituted that, instead of the acceleration sensors 110A and 110B in Example 1, includes an acceleration sensor module 400.

The acceleration sensor module 400 is formed by integrating two acceleration sensors 110A and 110B on the silicon substrate 120. By, as described above, integrating the two acceleration sensors 110A and 110B to configure the acceleration sensor module 400, the number of components of the acceleration detection device 100A can be decreased, whereby production costs can be reduced.

In addition, in Example 2, the acceleration sensor module 400 has been constituted that includes the two acceleration sensors 110A and 11OB; however, an acceleration sensor module may be constituted that includes three or more acceleration sensors respective detectable ranges of which are set to be different from one another.

Moreover, in Example 2, an acceleration sensor is constituted that can detect respective acceleration components produced inthex-axis, y-axis, and z-axis directions that are perpendicular to one another; however, an acceleration sensor may be constituted that can detect one or two of the acceleration components.

Still moreover, in Example 2, two or more acceleration sensors are arranged on the same plane inside a single module; however, two or more acceleration sensors may be arranged stacked on top of the other in a single module.

Furthermore, in Example 2, the acceleration detection device 100 is mounted fixed to the rim 16 of the tire 10; however, the acceleration detection device 100 may be fixed to the inner wall of the cap tread 11 of the tire or the tire 10 may be constituted, in the cap tread of which the acceleration detection device 100 is embedded.

### Industrial Applicability

According to an acceleration-detection method and an acceleration detection device of the present invention, by simply providing in a tire two or more acceleration sensors whose detection ranges are different from one another or an acceleration sensor module in which the two or more acceleration sensors are integrated, acceleration upon low-speed running and high-speed running can accurately be detected over the whole detection range.

## Claims

1. An acceleration detection method of detecting, through an acceleration sensor provided in a tire, acceleration, in a predetermined direction, that is produced on the tire of a running vehicle, the method comprising the steps of:
providing two or more acceleration sensors that have respective detectable ranges each including a maximal acceleration value and a minimal acceleration value that can be detected with a predetermined tolerance, each detectable range having an upper limit that is the maximal acceleration value and a lower limit that is the minimal acceleration value;
setting the respective detectable ranges of the acceleration sensors to be so different from one another as to have respective ranges at least part of which do not overlap one another; and
detecting at the accuracy in accordance with the predetermined tolerance and by use of the two or more acceleration sensors, acceleration values, from lower to higher values, to be detected.

2. The acceleration detection method according to claim 1, wherein different acceleration sensors are allocated to two or more divided running speed ranges of the vehicle, and acceleration is detected that, in each divided running speed range, is produced on the tire.

3. An acceleration detection device for detecting, through an acceleration sensor provided in a tire, acceleration, in a predetermined direction, that is produced on the tire of a running vehicle, the acceleration detection device comprising:
two or more acceleration sensors that have respective detectable ranges each including a maximal acceleration value and a minimal acceleration value that can be detected with a predetermined tolerance, each detectable range having an upper limit that is the maximal acceleration value and a lower limit that is the minimal acceleration value; and
means for allocating different acceleration sensors to two or more divided running speed ranges of the vehicle and detecting acceleration that, in each divided running speed range, is produced on the tire,
wherein the respective detectable ranges of the acceleration sensors are set to be so different from one another as to have respective ranges at least part of which do not overlap one another.

4. The acceleration detection device according to claim 3, wherein the two or more acceleration sensors are arranged in a single module.

5. The acceleration detection device according to claim 4, wherein the two or more acceleration sensors are arranged stacked on top of the other in a single module.

6. The acceleration detection device according to claim 4, wherein the two or more acceleration sensors are arranged on the same plane in a single module.

7. An acceleration sensor module comprising:
two or more acceleration sensors that have respective detectable ranges each including a maximal acceleration value and a minimal acceleration value that can be detected with a predetermined tolerance, each detectable range having an upper limit that is the maximal acceleration value and a lower limit that is the minimal acceleration value; and
the respective detectable ranges of the acceleration sensors being set to be so different from one another as to have respective ranges at least part of which do not overlap one another.

8. A tire comprising:
an acceleration sensor detecting acceleration, in a predetermined direction, that is produced on tires of a running vehicle; and
two or more acceleration sensors that have respective detectable ranges each including a maximal acceleration value and a minimal acceleration value that can be detected with a predetermined tolerance, each detectable range having an upper limit that is the maximal acceleration value and a lower limit that is the minimal acceleration value,
wherein the respective detectable ranges of the acceleration sensors are set to be so different from one another as to have respective ranges at least part of which do not overlap one another.
